# EUROPÄISCHE PATENTANMELDUNG

(11) **EP 1 158 015 A1**
(43) Veröffentlichungstag der Anmeldung: **28.11.2001**
(21) Anmeldenummer: 01107774.0
(22) Anmeldetag: 04.04.2001
(51) Int. Cl.: C08J 3/20, B29B 7/84, C08L 21/00

(54) **Verfahren zur Herstellung von feststoffhaltigen Kautschukmassen**

(30) Priorität: 25.05.2000 DE 10025872
(71) Anmelder: Wacker-Chemie GmbH, 81737 München (DE)
(72) Erfinder: Heisler, Manfred, Dr., 84547 Emmerting (DE); Huber, Helmut, 84547 Emmerting (DE); Schlierf, Alois, 84489 Burghausen (DE); Schöffel, Christoph, 84489 Burghausen (DE); Schuster, Johann, Dr., 84547 Emmerting (DE)
(74) Vertreter: Fritz, Helmut, Dr.

(57) **Zusammenfassung**

Gegenstand der Erfindung ist ein Verfahren zur Herstellung von Kautschukmassen, welche gashaltigen Feststoff umfassen, bei dem der Feststoff unmittelbar vor dem Vermischen mit Kautschukgrundpolymer durch Entgasung verdichtet wird.

## Beschreibung

Die vorliegende Erfindung betrifft ein Verfahren zur Herstellung von Kautschukmassen, welche gashaltigen Feststoff umfassen.

Gashaltige Feststoffe mit niedrigem Schüttgewicht, wie pyrogen hergestellte Kieselsäure und Ruß sind schwer in Kautschukmassen einzumischen. Deren große Oberfläche, die mit dem Gas belegt ist, wird nur durch zeitintensives Mischen mit den Grundpolymeren und anderen Bestandteilen der Kautschukmassen benetzt, da das Gas verdrängt werden muß. Wenn der Feststoff zu schnell zudosiert wird, bildet sind in der Mischeinrichtung um Wandung und Mischflügel oder Schnecke eine lockere Feststoffschicht. Dadurch wird die Reibung sehr stark herabgesetzt und die zur Vermischung notwendigen Scherkräfte werden nicht erreicht. Folglich wird der Durchsatz einer Vorrichtung zur Herstellung von Kautschukmassen maßgeblich von der Einmischung der gashaltigen Feststoffe bestimmt.

Aufgabe der vorliegenden Erfindung war es, ein Verfahren zur Herstellung von Kautschukmassen bereitzustellen, bei welchem die gashaltigen Feststoffe schneller eingemischt werden können.

Gegenstand der Erfindung ist ein Verfahren zur Herstellung von Kautschukmassen, welche gashaltigen Feststoff umfassen, bei dem der Feststoff unmittelbar vor dem Vermischen mit Kautschukgrundpolymer durch Entgasung verdichtet wird.

Bei dem erfindungsgemäßen Verfahren wird das Schüttgewicht des gashaltigen Feststoffs an der Einmischstelle erhöht. Es muß weniger Volumen pro Zeit eingemischt werden. Dadurch erfolgt die Einmischung des Feststoffs schneller. Die Herstellung der Kautschukmassen wird so wesentlich beschleunigt, insbesondere bei kontinuierlicher Fahrweise.

Beispiele für Kautschukmassen, die nach dem Verfahren hergestellt werden können sind Naturkautschuk und Synthesekautschuke, wie synthetischer Polyisoprenkautschuk, Buna, SR, SBR, CR, BR, Polyurethankautschuk, NBR, IIR, BIIR, CO, ECO, CSM, EVA, EVM, PNR, ACM, ANM, FPM, FKM, CFM, PNF, TR, TPR, EPDM, EPM, TRP, Cyclokautschuk und Siliconkautschuke, wie HTV, RTV, LSR. Besonders vorteilhaft wirkt sich die Beschleunigung bei der kontinuierlichen Herstellung der HTV-Siliconkautschukmassen aus, die üblicherweise hochviskos sind.

Der gashaltige Feststoff enthält üblicherweise ein Gas, welches gegenüber dem Feststoff und den Bestandteilen der Siliconkautschukmasse inert ist, beispielsweise Stickstoff, Argon oder Luft. Der gashaltige Feststoff ist vorzugsweise fluidisierbar. Der gashaltige Feststoff weist vorzugsweise ein Schüttgewicht von höchstens 0,4 g/cm³, besonders bevorzugt höchstens 0,3 g/cm³, insbesondere höchstens 0,2 g/cm³ auf.

Beispiele für gashaltige Feststoffe sind verstärkende Füllstoffe, also Füllstoffe mit einer BET-Oberfläche von mindestens 50 m²/g, wie pyrogen hergestellte Kieselsäure, gefällte Kieselsäure, Ruß, wie Furnace- und Acetylenruß und Silicium-Aluminium-Mischoxide großer BET-Oberfläche und faserförmige Füllstoffe, wie Asbest sowie Kunststoffasern.

Da der gashaltige Feststoff unmittelbar vor dem Vermischen verdichtet wird, kann Transport, Förderung und Dosierung des gashaltigen Feststoffs in üblicher Weise erfolgen.

Die Entgasung des gashaltigen Feststoffs kann durch Abziehen des Gases unter vermindertem Druck, durch mechanisches Verdichten oder eine Kombination daraus erfolgen. Druckempfindliche Feststoffe, deren Struktur durch mechanische Kräfte beeinträchtigt werden kann, werden vorzugsweise durch Abziehen des Gases unter vermindertem Druck verdichtet. Geeignete Einrichtungen zur Entgasung unter vermindertem Druck sind beispielsweise Vakuumförderschnecken. Geeignete Einrichtungen zum mechanischen Verdichten sind beispielsweise Presswalzen. Besonders wirksame Entgasung erfolgt in Vakuumpresswalzen, in denen unter vermindertem Druck und gleichzeitig mechanisch verdichtet wird und der Verdichtungsgrad über Druck sowie Drehzahl und Spaltbreite der Walzen geregelt werden kann.

Geeignet zum Vermischen der gashaltigen Feststoffe mit Kautschukgrundpolymer und gegebenenfalls weiteren Bestandteilen der Kautschukmasse sind die bei der Herstellung von Kautschukmassen üblichen Mischeinrichtungen. Beispiele hierfür sind Statik- und Dynamikmischer, vorzugsweise Dynamikmischer, diskontinuierliche und kontinuierliche Mischeinrichtungen. Beispiele für diskontinuierliche Mischeinrichtungen sind Rührwerke, Sigmakneter, Stempelkneter, Mischwalzwerke, Innenmischer und Dissolver. Beispiele für kontinuierliche Mischeinrichtungen sind Mischturbinen, Preßmischer und Schneckenkneter, wie Einschnecken-, Doppelschnecken-, oszillierender Pilgerschritt- und Conterna®-Kneter.

## Patentansprüche

1. Verfahren zur Herstellung von Kautschukmassen, welche gashaltigen Feststoff umfassen, bei dem der Feststoff unmittelbar vor dem Vermischen mit Kautschukgrundpolymer durch Entgasung verdichtet wird.

2. Verfahren nach Anspruch 1, bei dem Siliconkautschukmassen hergestellt werden.

3. Verfahren nach Anspruch 1 oder 2, bei dem der gashaltige Feststoff ein Schüttgewicht von höchstens 0,4 g/cm³ aufweist.

4. Verfahren nach Anspruch 1 bis 3, bei dem die Entgasung des gashaltigen Feststoffs durch Abziehen des Gases unter vermindertem Druck erfolgt.

5. Verfahren nach Anspruch 1 bis 4, bei dem die Entgasung des gashaltigen Feststoffs durch mechanisches Verdichten erfolgt.
